**Europäisches Patentamt**

**European Patent Office**

**Office européen des brevets**

(19)

(11) Veröffentlichungsnummer : **0 493 327 A1**

## (12) EUROPÄISCHE PATENTANMELDUNG

(21) Anmeldenummer : **91810998.4**

(22) Anmeldetag : **23.12.91**

(51) Int. Cl.$^5$ : **B65G 1/04**

(30) Priorität : **27.12.90 CH 4120/90**

(43) Veröffentlichungstag der Anmeldung :
**01.07.92 Patentblatt 92/27**

(84) Benannte Vertragsstaaten :
**AT CH DE FR GB LI NL**

(71) Anmelder : **Manitec Consulting AG**
**Buholzstrasse 36**
**CH-6032 Emmen (CH)**

(72) Erfinder : **Koller, Hans**
**Wegmattstrasse 22**
**CH-6048 How (CH)**

(74) Vertreter : **Keller, René, Dr. et al**
**Patentanwälte Dr. René Keller & Partner**
**Postfach 12 Marktgasse 31**
**CH-3000 Bern 7 (CH)**

(54) **Stellplatzregal.**

(57)     Das Stellplatzregal hat in vertikalen Kolonnen **(7a, 7b)** übereinander angeordneten Regalstellplätzen **(3)** für die Aufnahme von Lagerbehältern **(5)** und einem Lift **(9)** mit einer Lagerbehälteraufnahme **(19)** für den Transport der Lagerbehälter **(5)** zu den Regalstellplätzen **(3)**. Die Kolonnen **(7a,7b)** sind paarweise gegenüberliegend angeordnet sind. Die Lagerbehälteraufnahme **(19)** des Lifts **(9)** ist jeweils zwischen den beiden Kolonnen **(7a/7b)** eines Kolonnenpaars **(1)** vertikal verfahrbar angeordnet. Für jedes Kolonnenpaar **(1)** ist ein eigener Lift **(9)** mit einer nur vertikal verfahrbaren Lagerbehälteraufnahme **(19)** vorgesehen, welcher eine über den Liftschacht **(6)** zwischen den beiden Kolonnen **(7a/7b)** jedes Kolonnenpaares **(1)** hinausragende zum horizontalen Verschieben der Lagerbehälter **(5)** dienende Verschiebevorrichtung hat. Die über den Liftschacht **(6)** hinausragende Endteile der Verschiebevorrichtung verlaufen beidseits entlang der beiden Kolonnenseiten.

    Durch je einen Lift **(9)** für nur ein oder einige Kolonnenpaare **(1)** ist einerseits eine einfache konstruktive Gestaltung und eine äußerst störungssichere Verwendung des Stellplatzregals möglich. Da ferner die Greifmittel immer in unmittelbarer Nähe der zu bewegenden Lagerbehälter **(5)** liegen, ist ein äußerst rascher Zugriff auf diese gegeben.

Fig. 1

EP 0 493 327 A1

EP 0 493 327 A1

Die Erfindung betrifft ein Stellplatzregal gemäß dem Oberbegriff des Patentanspruchs 1.

Stellplatzregale dienen als Materiallager und Produktionspuffer, um Material in Lagerbehältern für die oder aus der Fertigung auf Regalstellplätzen zwischenzulagern. Ein Zugriff auf einen bestimmten Lagerbehälter muß möglichst schnell erfolgen, um rasch auf Veränderungen in der Fertigung z. B. bei Maschinenausfällen oder Eilanlieferungen reagieren zu können.

Aus der GB-A 2 205 822 ist ein gattungsgemäßes Stellplatzregal bekannt. Das bekannte Stellplatzregal hat in Kolonnen nebeneinander angeordnete Stellplätze für Lagerbehälter und einen horizontal verfahrbaren Lift mit einer vertikal verfahrbaren Lagerbehälteraufnahme. Die Kolonnen sind paarweise gegenüberliegend zu Kolonnenpaaren angeordnet. Der Lift kann zwischen die beiden Kolonnen eines Kolonnenpaares gefahren werden. Beidseits der Lagerbehälteraufnahme sind je ein Endlosfördermittel mit je zwei hakenförmigen Elementen angeordnet. Die Lagerbehälter weisen seitliche Aussparungen auf, in welche die Haken eingreifen können. Zum Herausnehmen eines der Lagerbehälter aus einer Kolonnen wird der Lift vor die betreffende Kolonnen gefahren, die Lagerbehälteraufnahme auf die Höhe des Behälterbodens angehoben und die Endlosfördermittel links und rechts neben den zu greifenden Lagerbehälter teleskopartig ausgefahren. Die ausgefahrenen Teile des Endlosfördermittel werden gegen die Behälterwände gedrückt und die Endlosfördermittel in Rotation versetzt, worauf die hakenförmigen Elemente schleifend an den Behälterwänden entlang gleiten, bis sie in die Behälteraussparungen eingreifen und den Behälter aus seinem Stellplatz auf die Lagerbehälteraufnahme ziehen. Ist der Behälter vollständig auf die Behälteraufnahme gezogen, wird die Rotation der Endlosfördermittel abgestellt, die teleskopartig ausgezogenen Teile der Endlosfördermittel wieder eingezogen und anschließend der Lift zur gewünschten Position verfahren.

Weitere gattungsgemäße Stellplatzregale sind aus der EP-A 0 192 259 und der US-A 1 225 974 bekannt, welche ebenso wie das obige aus der GB-A 2 205 822 bekannte Stellplatzregal eine horizontal und vertikal verfahrbare Lagerbehälteraufnahme mit teleskopartig ausfahrbaren Greifelementen zum Herausziehen der Lagerbehälter aufweisen.

Aus der BE-A 897 699 ist ein weiteres Stellplatzregal, allerdings nur mit einem einzigen Kolonnenpaar, mit einem Lift zwischen den beiden zur Ablage von Dokumenten vorgesehenen Ablagebehältern bekannt. Die Aufnahmeplattform des Lifts hat eine über ihre Stirnseite hinausragende, endlos umlaufende Kette mit zwei horizontalen Stiften, welche an der dem Liftschacht benachbarten Behälterseite in deren mittig angeordneten, ausladenden Ansatz als Ankoppelelement, der einen zentralen Freiraum zum Einfahren des über die Aufnehmeplattform hinausragenden Kettenumlaufsorts aufweist, zum Herausziehen der Behälter eingreifen. Der auf die Aufnahmeplattform herausgezogene Behälter wird dann mit dieser zur Oberseite des Kolonnenpaares gehoben, wo die Dokumente mit einer Entnahmeeinrichtung aus dem Behälter entnommen werden können. Die Ablagebehälter sind jeweils nur einer einzigen Kolonne zugeordnet und können nicht in der gegenüberliegenden Kolonne abgelegt werden.

Die aus der GB-A 2 205 822, der EP-A 0 192 259 und der US-A 1 225 974 bekannten Stellplatzregale haben einen teleskopartig über die Stirnseite der Aufnahmeplattform hinaus ausstoßbaren Auszugsmechanismus, während in der BE-A 897 699 ein über die Stirnseite der Aufnahmeplattform vorstehender Auszugsmechanismus, der in das an der Behälterstirnseite angeordnete hakenförmige Ankoppelelement eingreift, verwendet wird; ein Entnehmen der Behälter aus der Anordnung des Kolonnenpaares ist nicht vorgesehen.

Der Erfindung liegt die Aufgabe zugrunde ein konstruktiv einfaches, störunanfälliges Stellplatzregal zu schaffen, bei dem ein schnelles Einlagern von Lagerbehältern in und ein schnelles Auslagern aus ihren Regalstellplätzen möglich ist.

Die Lösung der Aufgabe ist Gegenstand des Patentanspruchs 1. Bevorzugte Ausführungsformen sind in den Patentansprüchen 2 bis 10 beschrieben.

Im folgenden werden Beispiele erfindungsgemäßer Stellplatzregale anhand der Zeichnungen näher erläutert. Es zeigen:

Fig. 1 eine Stirnansicht eines Stellplatzregals,

Fig. 2 eine Seitenansicht des in **Figur 1** dargestellten Stellplatzregals in Blickrichtung II,

Fig. 3 einen horizontalen Schnitt durch das Stellplatzregal in Blickrichtung III in **Figur 1**,

Fig. 4 einen Blick auf die Lagerbehälteraufnahme des Lifts des Stellplatzregals,

Fig. 5 eine Seitenansicht einer Variante der Lagerbehälteraufnahme und

Fig. 6 eine Draufsicht im vergrößerten Maßstab auf eine bevorzugte Ausführungsform eines am Endlosfördermittel angeordneten Nockens der in **Figur 4** dargestellten Lagerbehälteraufnahme.

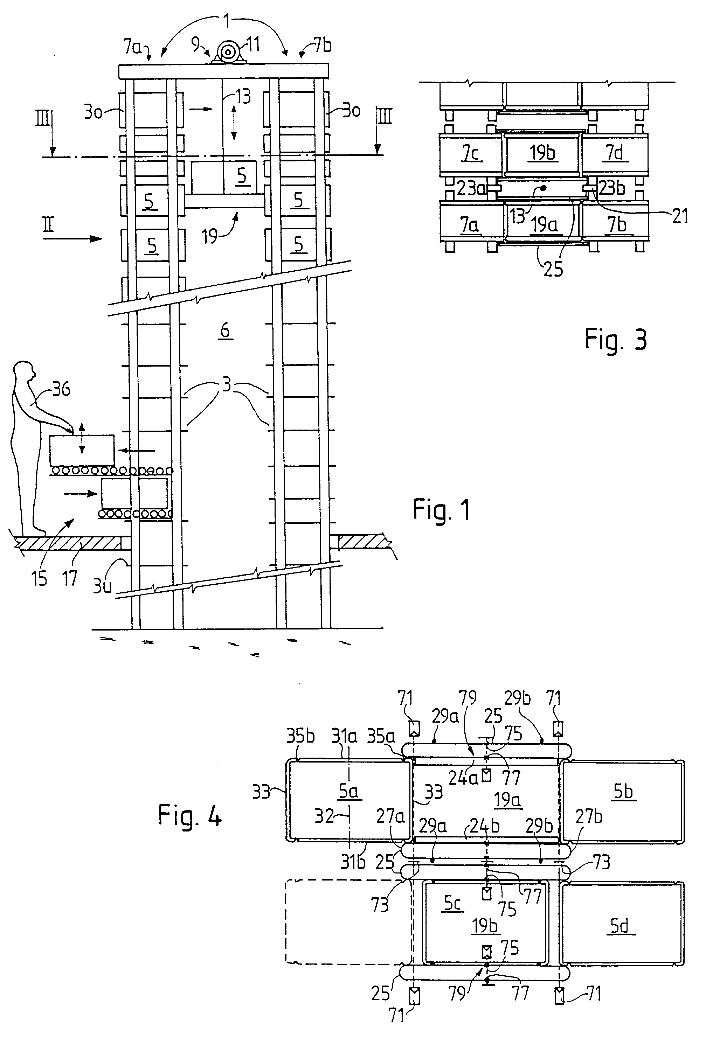

Das in den **Figuren 1**, **2** und **3** dargestellte Stellplatzregal hat mehrere in Kolonnenpaaren **1** angeordnete Stellplätze **3** für Lagerbehälter **5**. Jeweils zwischen den Kolonnen **7a** und **7b** sowie **7c** und **7d** zweier Kolonnenpaare **1a** und **1b** ist ein Liftschacht **6** eines Lifts **9** angeordnet.

Der Lift **9** hat einen auf dem Stellplatzregal angeordneten Elektroantrieb **11**, der mit einem Seil **13** im Liftschacht **6** zwischen einem Ein- und Ausgabeort **15** in ergometrischer Höhe über dem Fußboden **17** und dem

2

obersten und untersten Regalstellplatz **3o** und **3u** zwei miteinander verbundenen Lagerbehälteraufnahmen **19a** und **19b** vertikal verfahren kann. Die beiden Lagerbehälteraufnahmen **19a** und **19b** sind mit einer Führung **21** zwischen den Kolonnenpaaren **1a** und **1b**, d.h. im Zwischenraum **23a** bzw. **23b** zwischen den Kolonnen **7a** und **7b** sowie zwischen den Kolonnen **7c** und **7d** geführt. Die Lagerbehälteraufnahmen **19a** und **19b** haben zwei winkelförmige Führungen **24a** und **24b** im Abstand der Lagerbehälterbreite, welche den aufgenommenen bzw. aufzunehmenden Lagerbehälter **5** tragen und seitlich führen.

Neben jeder Führung **24** außerhalb der Lagerbehälteraufnahme **19** verläuft je ein Trum eines Zahnriemens **25** als Endlosfördermittel oberhalb der Führungen **24** annähernd horizontal. Der bestand beider horizontal verlaufender Trume, welche synchron miteinander bewegt werden, entspricht der Breite eines Lagerbehälters **5**. Die beiden Umkehrpunkte **27a** und **27b** jedes Zahnriemens **25** reichen in die Zwischenräume **23a** bzw. **23b** hinein, bzw. überragen die beiden einander gegenüberliegenden dem Liftschacht **6** benachbarten Stirnseiten der in den gegenüberliegenden Kolonnen angeordneten Lagerbehälter **5** beidseits. Jeder Zahnriemen **25** hat zwei nach außen gerichtete Nocken **29a** und **29b** als Greifmittel für die Lagerbehälter **5**, deren Wirkungsweise unten beschrieben ist. Die Zahnriemen **25** sind durch nicht dargestellte Elektroantriebe bewegbar.

Die Lagerbehälter **5** haben, wie in **Figur 4** dargestellt, in ihren Seitenwänden **31a** und **31b** je eine symmetrisch zur Quermittellinie **32** jedes Lagerbehälters **5** in der Nähe der Lagerbehälterstirnwände **33** angeordnete Seitenaussparung **35a** bzw. **35b**.

Für jeweils zwei Kolonnenpaare **1** ist ein Lift **9** vorhanden, d. h. das Stellplatzregal hat entsprechend seiner Anzahl Kolonnenpaare **1** mehrere Lifte **9**. Es kann jedoch auch jeweils ein Lift pro Kolonnenpaar vorhanden sein.

Zum Herausnehmen eines Lagerbehälters **5** z. B. des Lagerbehälters **5a** in **Figur 4**, fährt die Lagerbehälteraufnahme **19a/19b** des Lifts **9** des betreffenden Doppelkolonnenpaares **1** zum ausgewählten Regalstellplatz **3** bis die horizontale Auflage seiner winkelförmigen Führungen **24a** und **24b** der Lagerbehälteraufnahme **19a** sich auf der Höhe des Bodens des herauszunehmenden Lagerbehälters **5a** befindet. Die beiden Zahnriemen **25** neben der Lagerbehälteraufnahme **19a** werden derart in Bewegung gesetzt, daß sich die Nocken **29a**, welche sich auf dem zur Lagerbehälteraufnahme **19a** abgewandten Trum befanden, auf den Lagerbehälter **5a** zubewegen. Da sich der Umkehrpunkt **27a** des Trums des Zahnriemen **25** in unmittelbarer Nähe der Seitenaussparungen **35a** befinden, greifen die Nocken **29a** in die Seitenaussparungen **35a** ein und ziehen den Lagerbehälter **5a** auf die Lagerbehälteraufnahme **19a**. Befindet sich der Lagerbehälter **5a** etwa zur Hälfte auf der Lagerbehälteraufnahme **19a**, so greifen die zweiten Nocken **29b** in die Aussparungen **35b** ein. Der Lagerbehälter **5a** wird vollständig auf die Lagerbehälteraufnahme **19a** befördert, wie am Beispiel des Lagerbehälters **5c** auf der Lagerbehälteraufnahme **19b** dargestellt ist. Anschließend verfährt der Lift **9** zum Ein-/Ausgabeort **15**. Hier wird der Lagerbehälter **5** analog obigem Bewegungsvorgang in die Kolonne **7a** geschoben und kann hier von einem Arbeiter **36** entnommen oder auf ein nicht dargesteltes Band gezogen werden. Soll der Lagerbehälter **5a** zu einem anderen Regalstellplatz **3** transportiert werden, wird analog verfahren.

Die Seitenaussparungen **35a** und **35b** sind zur Quermittellinie **32** der Lagerbehälter **5** symmetrisch angeordnet, damit dieser in jede der gegenüberliegenden Kolonnen **7** wahlweise schiebbar ist. Wird z. B. der in **Figur 4** dargestellte Lagerbehälter **5b** herausgezogen, so wird die Laufrichtung des Zahnriemens **25** geändert und der Nocken **29b** bewegt sich auf den Lagerbehälter **5b** zu und greift am Umkehrort **27b** des Zahnriemens **25** in die der Lagerbehälteraufnahme **19a** benachbarten Seitenaussparungen ein.

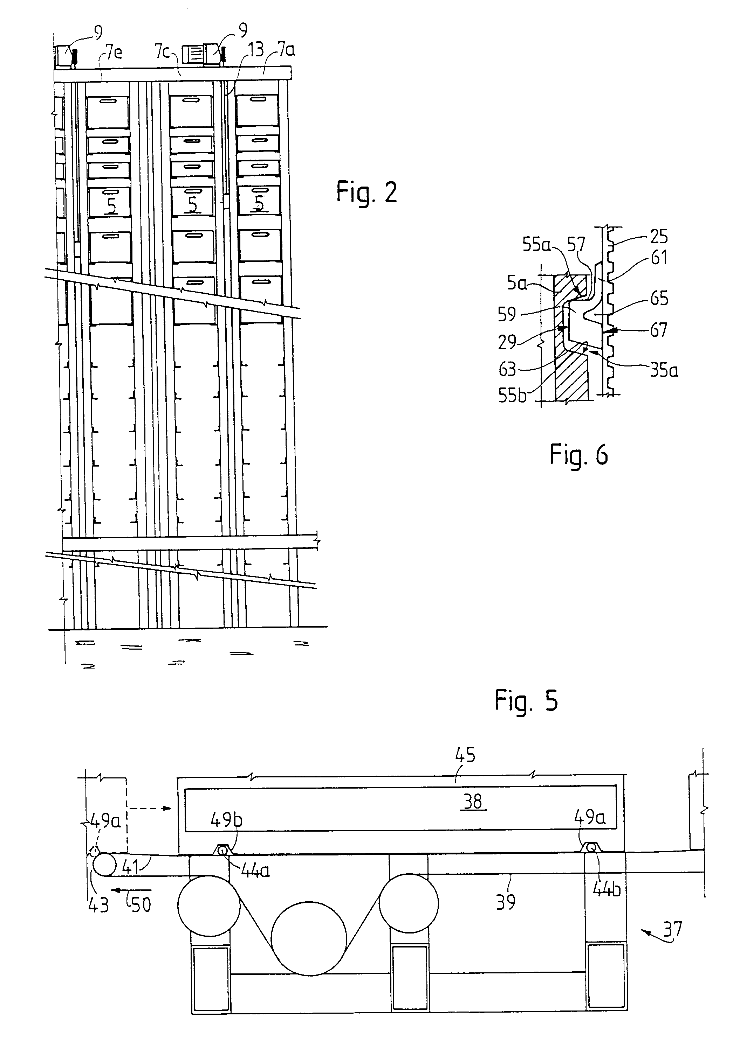

In **Figur 6** ist eine bevorzugte Ausgestaltung der Nocken, hier des Nockens **29a** beim Ausziehen des Lagerbehälters **5** aus seinem Stellplatz **5** dargestellt. Der Nocken **29a** ist aus elastischem Material hergestellt und auf dem Zahnriemen **25** aufgeklebt bzw. aufvulkanisiert. Die Aussparung **35a** am Behälter **5** ist in ihrem Querschnitt trapezförmig ausgebildet. Der Nocken **29a** ist zum Nocken **29b** spiegelbildlich auf dem Zahnriemen **25** angeordnet. Die beim Ausziehen aus dem Stellplatz **5** an der einen Trapezseite **55a** des Aussparung **35a** anschlagende Seite **57** des Nockens **29a** ist annähernd senkrecht zur Oberfläche des Zahnriemens **25** ausgebildet und geht in einen über die Nockenerhebung **59** hinaus verlängerten Fußteil **61** über. Die beim Einschieben des Lagerbehälters **5** anliegende, andere Seite **63** des nockens **29a** hat eine neigung, welche bis auf eine Toleranz gleich der neigung der der Trapezseite **55a** gegenüberliegenden Trapezseite **55b** der Aussparung **35a** entspricht. Ein Hohlraum **65** erstreckt sich senkrecht zur Längsrichtung des Zahnriemens **25** unmittelbar über diesem in der nockenerhebung **59** derart, daß die Dicke der Trapezseite **63** größer ist als die Dicke der Trapezseite **57**. Die Auflagefläche **67** der dicken Wand der Trapezseite **63** auf dem Zahnriemen **25** ist ebenfalls auf diesem festgeklebt oder aufvulkanisiert.

Die Ausgestaltung der Trapezseite **57** und des an sie anschließenden Fußteils **61**, wurde, wie oben beschrieben, so ausgestaltet, damit ein möglichst weiches Anschlagen des nockens **29a** in der Aussparung **35a** bei voller Auszugsgeschwindigkeit des Zahnriemens **25** erreichbar ist. Durch dieses weiche Anschlagen kann auf eine aufwendige Geschwindigkeitsregulierung im Geschwindigkeitsablauf der Zahnriemen **25** verzichtet werden, da durch diesen weichen Anschlag einerseits eine Beschädigung der Aussparung **35a** sowie auch **35b** und anderseits durch den sehr stark reduzierten Anfahrtskraftstoß auf den Behälter **5** ein Verrutschen des in ihm gelagerten Inhalts vermieden wird. Da beim Eingreifen des nockens **29a** in die Aussparung **35a** die Geschwindigkeit nicht reduziert werden muß, ergibt sich eine kürzere Zugriffszeit zu den Lagerbehältern **5**.

Die Trapezseite **63** wurde verhältnismäßig steif ausgebildet, da sie nur zum Einschieben des Behälters **5** von der Lagerbehälteraufnahme **19** aus dient. Zum Einschieben wird der Zahnriemen **25** aus seinem Stillstand angefahren, d. h. es ergibt sich hier nur ein vernachläßigbarer Beschleunigungskraftstoß auf den Behälter **5**.

Der Hohlraum **65** ergibt sich durch das gewünschte unterschiedliche elastische Verhalten der beiden Seiten **57** und **63** des nockens **29a** bzw. **29b**. Er ist jedoch ferner notwendig, um eine saubere Bewegung des Nockens **29a** sowie auch des Nockens **29b** zusammen mit dem ihm benachbarten Zahnriemenbereich an den Umkehrort **27a** bzw. **27b** des Zahnriemens **25** zu gewährleisten.

Für das einwandfreie Funktionieren des Stellplatzregals ist eine Überwachung der Lage der Nocken **29a** und **29b** sowie der Lagerbehälter **5** auf der Lagerbehälteraufnahme **19** und auf den Regalstellplätzen **3** notwendig. Auf den Stellplätzen **3** falsch abgestellte Lagerbehälter **5** können entweder nicht mehr von den Greifmitteln gegriffen werden oder können zu einem Verklemmen des Liftes **9** führen, falls sie in den Liftschacht **6** hineinragen. Ebenfalls zum Verklemmen des Liftes **9** können Greifmittel (Nocken **29a**, **29b**) führen, welche während des Verfahrens des Lifts **9** die Seitenwände der in den Regalstellplätzen **3** abgestellten Lagerbehälter **5** berühren.

Die Lage der dem Liftschacht **6** zugewandten Lagerbehälterseite in den Regalstellplätzen **3** wird, wie in **Figur 4** dargestellt, durch je eine aus Lichtquelle und Detektor **71** sowie Reflektorspiegel **73** bestehenden Lichtschranke kontrolliert. Jeder Zahnriemen **25** ist, wie ebenfalls in **Figur 4** dargestellt, jeweils in der Mitte zwischen den beiden als Nocken **29a** und **29b** ausgebildeten Greifmitteln mit einem Durchbruch **75** und **77** versehen, durch den der Lichtstrahl einer Lichtschranke **79** nur laufen kann, wenn sich die Nocken **29a** und **29b** in ihrer Ausgangsposition, wie bei den Behältern **5a** und **5b** im oberen Teil der **Figur 4** befinden oder der Lagerbehälter **5** eine mittige Position auf der Lagerbehälteraufnahme **19b**, wie im unteren Teil der **Figur 4** dargestellt, eingenommen hat.

Anstelle die Zahnriemenpaare **25** und die Lagerbehälteraufnahme **19**, wie oben beschrieben, anzuordnen, kann, wie in **Figur 5** in einer Seitenansicht dargestellt, in einer Variante zur Lagerbehälteraufnahme **37** anstelle der winkelförmigen Führung **24** nur eine seitlich Führung **38** neben der Lagerbehälteraufnahme **37** ungefähr in einem Drittel der Höhe der Lagerbehälterhöhe angeordnet sein. Anstelle der Zahnriemenpaare **25** ist pro Lagerbehälteraufnahme **37** ein Zahnriemenpaar **39** mit einem horizontal, neben der seitlichen Führung **38** verlaufenden Trum **41** vorhanden. Ihre Umkehrorte **43** liegen analog zu den Umkehrorten **27a** und **27a** im Zwischenraum **23a** bzw. **23b** zwischen den Kolonnen **7**. Diese beiden Trume **41** sind auf ihrer Außenseite rechtwinklig mit zwei Stangen **44a** und **44b** in einem Abstand, der dem unten beschriebenen Abstand unten beschriebener Bodenaussparungen **49a** und **49b** entspricht, verbunden. Die für ein Stellplatzregal mit der Lagerbehälteraufnahme **37** zu verwenden Lagerbehälter **45** sind analog zu den Lagerbehältern **5** ausgebildet, sie haben jedoch anstelle der Seitenaussparungen **35a** und **35b** Bodenaussparungen **49** in der Nähe ihrer Stirnwände symmetrisch zur Quermittellinie des Lagerbehälters **45**.

Zum Herausziehen des linken Lagerbehälters **45** in **Figur 5** fährt die Lagerbehälteraufnahme **37** des Lifts **9** des betreffenden Doppelkolonnenpaares **1** zum ausgewählten Regalstellplatz **3** bis die horizontalen Trume **41** sich auf der Höhe des Bodens des herauszunehmenden Lagerbehälters **45** befinden. Die beiden Zahnriemen **39** werden in Pfeilrichtung **50** in **Figur 5** bewegt. Nachdem die Stange **47a** den linken Umkehrpunkt **43** passiert hat, greift sie in die Bodenaussparung **49a** ein und zieht den Lagerbehälter **45** seitlich geführt durch die seitlichen Führungen **38** auf die Lagerbehälteraufnahme **37**. Befindet sich der Lagerbehälter **45** etwa zur Hälfte auf der Lagerbehälteraufnahme **37**, so greift die zweite Stange **47b** in die Bodenaussparung **49b** ein. Der Lagerbehälter **45** wird vollständig auf die Lagerbehälteraufnahme **37** gezogen. Anschließend verfährt der Lift **9** zum Ein-/Ausgabeort **15** oder einem anderen Regalstellplatz **3**. Die Bodenaussparungen **49a** und **49b** sind symmetrisch zur Quermittellinie **32** des Lagerbehälters **45** angeordnet, damit die Lagerbehälter **45** sowohl von links, wie auch von rechts in den Kolonnen **7** gegriffen und auch wieder dorthin abgestellt werden können. In der vertikalen Verfahrstellung der Lagerbehälteraufnahme **37** liegen die Stangen **44a** und **44b** immer innerhalb des Liftschachtes **6**. Nur zum Herausziehen oder Hineinschieben der Lagerbehälter **45** in eine der Kolonnen **7** wird eine der Stangen **44a** bzw. **44b** unter dessen Boden bewegt. Hierdurch läßt sich die Lagerbehälteraufnahme **37** problemlos im Liftschacht **6** auf und ab verfahren, obwohl die Umkehrorte **27a** und **27b** bzw. **43** in den Zwischenräumen **23a** und **23b** zwischen den Kolonnen **7** liegen.

Anstelle eines Zahnriemenpaares **25** bzw. **39** kann auch nur jeweils ein seitlicher Zahnriemen verwendet werden, jedoch ist dann hier nicht mehr die leichte Ausziehbarkeit wie bei den Zahnriemenpaaren **25** bzw. **39** gegeben.

Anstelle den Lift **9** mit zwei Lagerbehälteraufnahmen **19a** und **19b** bzw. **37** auszurüsten, um zwei Doppelkolonnen bedienen zu können, kann er auch nur mit einer Lagerbehälteraufnahme sowie mit drei und mehreren Lagerbehälteraufnahmen ausgerüstet werden.

Anstelle in jeden Stellplatz **3** nur einen Lagerbehälter einzustellen, können auch mehrere miteinander gekoppelte Lagerbehälter in einem Stellplatz gestellt werden.

Anstelle als Endlosfördermittel Zahnriemen zu verwenden, können auch andere Fördermittel, wie Ketten, Riemen, Bänder, etc. verwendet werden.

Anstelle der kleinen von einem Arbeiter oder Roboter zu bedienenden, bzw. zu einem anderen Ort zu transportierenden Lagerbehälter **5**, kann das Stellplatzregal auch für bedeutend größere Lagerbehälter ausgelegt werden. Anstelle obiger Lagerbehälter können auch nur Paletten verwendet werden. Werden z. B. auf diesen Paletten Kraftfahrzeuge abgestellt, so kann das Stellplatzregal auch als eine raumsparende Parkanlage verwendet werden

Durch je einen Lift für nur ein oder einige Kolonnenpaare ist eine einfache konstruktive Gestaltung und eine äußerst störungssichere Verwendung des Stellplatzregals möglich. Da ferner die Greifmittel immer in unmittelbarer Nähe der zu bewegenden Lagerbehälter liegen, ist ein äußerst rascher Zugriff gegeben.

## Patentansprüche

1. Stellplatzregal mit in vertikalen Kolonnen (**7a - 7d**) übereinander angeordneten Regalstellplätzen (**3**) für die Aufnahme von Lagerbehältern (**5**) und einem Lift (**9**) mit einer eine Verschiebevorrichtung (**25**) aufweisenden Lagerbehälteraufnahme (**19a, 19b**) zum Transport der Lagerbehälter (**5**) zu den Regalstellplätzen (**3**), wobei die Kolonnen (**7a - 7d**) paarweise gegenüberliegend angeordnet sind und die Lagerbehälteraufnahme (**19a, 19b**) des Lifts (**9**) jeweils zwischen den beiden Kolonnen (**7a/7b, 7c/7d**) eines Paars (**1**) vertikal verfahrbar ist, **dadurch gekennzeichnet**, daß für jedes Kolonnenpaar (**1**) ein eigener Lift (**9**) mit einer nur vertikal verfahrbaren Lägerbehälteraufnahme (**19a, 19b**) vorgesehen ist und daß die Verschiebevorrichtung (**25**) beidseits des Liftschachts (**6**) über die einander gegenüberliegenden Stirnseiten der Regalstellplätze (**3**) eines Kolonnenpaares (**1**) hinausragt.

2. Stellplatzregal nach Anspruch 1, **dadurch gekennzeichnet**, daß in jedem Kolonnenpaar (**1**) wenigstens einer der Regalstellplätze (**3**) einer der beiden Kolonnen (**7a/7b, 7c/7d**) zu einer von der dem Lift (**9**) abgewandten Seite zugänglichen, für die Ein- und Ausgabe der Lagerbehälter (**5**) bzw. des Lagerbehälterinhalts ausgebildeten Ein- und/oder Ausgabestation (**15**) umgestaltet ist.

3. Stellplatzregal nach Anspruch 1 oder 2, **dadurch gekennzeichnet**, daß die Verschiebevorrichtung (**25**) beidseits jeder Lagerbehälteraufnahme (**19a, 19b**) synchron bewegbare, durch den Liftschacht (**6**) zwischen den beiden Kolonnen (**7a/7b, 7c/7d**) jedes Kolonnenpaares (**1**) hindurch und über diesen hinaus entlang den Kolonnenseiten verlaufende Endlosfördermittel (**25**) hat.

4. Stellplatzregal nach AnsPruch 3, **dadurch gekennzeichnet**, daß jedes der Endlosfördermittel (**25**) mindestens ein nach außen ragendes Greifmittel (**29a, 29b; 44a, 44b**) zum Verschieben der Lagerbehälter (**5; 45**) hat.

5. Stellplatzregal nach Anspruch 4, **dadurch gekennzeichnet**, daß das Greifmittel (**29a, 29b**) und/oder das Endlosfördermittel (**25**) in Förderrichtung, bevorzugt zum Auszug der Lagerbehälter (**5**) aus den Regalstellplätzen (**3**), elastisch federnd ausgebildet ist, um einem beim Greifen eines stehenden Lagerbehälter (**5**) auftretenden Kraftstoß infolge einer zur Linearbewegung des Lagerbehälters (**5**) zu erbringenden Linearbeschleunigung derart abzufedern, daß keine Beschädigung am Lagerbehälter (**5**) und/oder kein Verrutschen des im Lagerbehälter (**5**) abgelegten Behälterinhalts erfolgt.

6. Stellplatzregal nach einem der Ansprüche 3 bis 5, **dadurch gekennzeichnet**, daß die einander zugewandten trume der beiden einer Lagerbehälteraufnahme (**19a, 19b**) des Lifts (**9**) zugeordneten Endlosfördermittel (**25**) annähernd horizontal und parallel in einem Abstand neben der Lagerbehälteraufnahme (**19a, 19b**) verlaufen, welcher der Breite der Lagerbehälter (**5; 45**) entspricht.

7. Stellplatzregal nach Anspruch 4, **dadurch gekennzeichnet**, daß jedes Greifmittel als Nocken (**29a, 29b**) ausgebildet ist und die Lagerbehälter (**5**) Seitenaussparungen (**35a, 35b**) zum Eingreifen der Nocken (**29a, 29b**) aufweisen.

8. Stellplatzregal nach Anspruch 4, **dadurch gekennzeichnet**, daß jedes Greifmittel durch eine oder mehrere die beidseits der Lagerbehälteraufnahme **(19a, 19b)** verlaufenden Endlosfördermittel **(39)** verbindende Stangen **(44a, 44b)** gebildet ist und die Lagerbehälter **(45)** Bodenaussparungen **(49)** zum Eingreifen der Stange bzw. Stangen **(44a, 44b)** aufweisen.

9. Stellplatzregal nach AnsPruch 7 oder 8, **dadurch gekennzeichnet**, daß jeder Lagerbehälter mindestens zwei zur Quermittellinie **(32)** symmetrisch angeordnete Aussparungen **(35a, 35b; 49a, 49b)** hat.

10. Stellplatzregal nach einem der Ansprüche 1 bis 9, **dadurch gekennzeichnet**, daß jeder Lagerbehälter aus mehreren lösbar miteinander verbundenen teilbehältern besteht, wobei jeder Lagerbehälter zur Quermittellinie der Lagerbehälter symmetrisch angeordnete Aussparungen aufweist.

Fig. 1

Fig. 3

Fig. 4

Fig. 2

Fig. 6

Fig. 5

**Europäisches Patentamt**

# EUROPÄISCHER RECHERCHENBERICHT

Nummer der Anmeldung

EP 91 81 0998

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-9 000 507 (ROTHLISBERGER)<br><br>* Seite 7, Zeile 1 - Seite 12, Zeile 21; Abbildungen 1-12 *<br>--- | 1,2,3,4,7 | B65G1/04 |
| D,A | BE-A-897 699 (PELEMAN-SAERENS)<br>* Abbildungen *<br>--- | 1,7,9 | |
| D,A | GB-A-2 205 822 (SUPAC SYSTEMS)<br><br>* das ganze Dokument *<br>--- | 1,3,4,6,7,9 | |
| D,A | EP-A-0 192 259 (APPLIED RETRIEVAL TECHNOLOGY)<br><br>* das ganze Dokument *<br>--- | 1,3,4,6,7,9 | |
| D,A | GB-A-1 225 974 (MOLINS MACHINE COMPANY)<br>* das ganze Dokument *<br><br>----- | 1,8,9,10 | |
| | | | **RECHERCHIERTE SACHGEBIETE (Int. Cl.5)**<br><br>B65G |

Der vorliegende Recherchenbericht wurde für alle Patentansprüche erstellt

| Recherchenort | Abschlußdatum der Recherche | Prüfer |
|---|---|---|
| DEN HAAG | 20 MAERZ 1992 | OSTYN T.J.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes Dokument

EPO FORM 1503 03.82 (P0403)